Europäisches Patentamt

(19) European Patent Office

Office européen des brevets

(11) Veröffentlichungsnummer: **0 235 515**
**B1**

(12) **EUROPÄISCHE PATENTSCHRIFT**

(45) Veröffentlichungstag der Patentschrift:
16.08.90

(51) Int. Cl.⁵: **B60T 8/26**, B60T 8/24

(21) Anmeldenummer: **87100508.8**

(22) Anmeldetag: **16.01.87**

(54) **Antiblockierregelsystem.**

(30) Priorität: **28.01.86 DE 3602432**

(43) Veröffentlichungstag der Anmeldung:
**09.09.87 Patentblatt 87/37**

(45) Bekanntmachung des Hinweises auf die Patenterteilung:
**16.08.90 Patentblatt 90/33**

(84) Benannte Vertragsstaaten:
**AT DE FR SE**

(56) Entgegenhaltungen:
**EP-A- 0 167 782**
**DE-A- 2 259 929**
**DE-A- 3 421 700**
**GB-A- 2 135 413**
**GB-A- 2 171 161**
**US-A- 3 797 892**

(73) Patentinhaber: **ROBERT BOSCH GMBH, Postfach 50,**
**D-7000 Stuttgart 1(DE)**

(72) Erfinder: **Jonner, Wolf-Dieter, Burgunderstrasse 25,**
**D-7141 Beilstein(DE)**
Erfinder: **Leiber, Heinz, Theodor-Heuss-Strasse 34,**
**D-7141 Oberriexingen(DE)**
Erfinder: **Roller, Dieter, Steinbeissstrasse 31,**
**D-7143 Vaihingen(DE)**

(74) Vertreter: **Kammer, Arno, Dipl.-Ing., ROBERT BOSCH**
**GmbH Zentralstelle Patente 2 Postfach 50,**
**D-7000 Stuttgart 1(DE)**

## Beschreibung

Die Erfindung betrifft ein Antiblockierregelsystem mit den Merkmalen des Oberbegriffs des Anspruchs 1.

Ein Antiblockierregelsystem mit diesen Merkmalen ist aus der DE-A 3 421 700 bekannt. Bei dem bekannten System wird bei Kurvenfahrt (vorgegebene Querbeschleunigung) die Giermomentenaufbauverzögerung außer Kraft gesetzt.

Eine Giermomentenaufbauverzögerung wird bei Fahrzeugen mit Antiblockierregler vorgenommen, um bei asymetrischem Reibbeiwert der Fahrbahn den Bremskraftunterschied an den Rädern der Vorderachse eines Fahrzeugs nicht zu groß werden zu lassen. Im Grundsatz wird bei der Giermomentenaufbauverzögerung der Druckanstieg am zuletzt Blockierneigung zeigenden Rad (High-Rad) begrenzt, wenn an dem anderen Rad (Low-Rad) Blockierneigung auftritt. Es sind verschiedene Lösungen für die Giermomentenaufbauverzögerung bekannt, so z.B. Druckaufbau am High-Rad ab Blockierneigung am Low-Rad nur noch mit verminderter Steigung (gepulst), ab Blockierneigung am Low-Rad Druckkonstanthaltung am High-Rad bis am Low-Rad wieder Druck aufgebaut wird und dann gemeinsamer, gepulster Druckaufbau, evtl. ein zusätzlicher kleiner Druckabbau am High-Rad vor der Konstanthaltephase usw.

Die Giermomentaufbauverzögerung läßt also am High-Rad nur einen zeitlich verzögerten Bremsdruckanstieg bis zum Maximalwert zu. Damit wird die sich maximal ausbildende Bremskraftdifferenz und das daraus resultierende Giermoment zeitlich so weit verzögert, daß der Fahrer genügend Reaktionszeit hat. Da der Zeitpunkt für den zeitlich begrenzten Druckanstieg am High-Rad aus der Instabilität des Low-Rades abgeleitet wird, treten vergleichbare Verhältnisse zwischen kurvenäußerem und kurveninnerem Rad auch bei Kurvenbremsung auf. Eine Erkennung der Kurvenbremsung aus dem Radverhalten ist nicht möglich.

Die meisten Fahrzeugkonzepte zeigen mit zunehmender Querbeschleunigung in der Kurve, bei nur geringen Fahrzeugverzögerungen, ein kurveneindrehendes (übersteuerndes) Verhalten. Bei einem Fahrzeug mit ABS ohne Giermomentaufbauverzögerung wird sich an diesem Verhalten, bei nur geringen Bremsverzögerungen, zunächst nichts ändern. Leitet der Fahrer jedoch eine höhere Bremsverzögerung ein, so entsteht durch die Bremskraftsteigerung am kurvenäußeren Vorderrad ein zum kurveneindrehenden Moment vorher beschriebener Art entgegenwirkendes Drehmoment, daß die Übersteuertendenz aufhebt.

Bei einem Fahrzeug mit Antiblockierregelung und Giermomentaufbauverzögerung wird nun der Aufbau der Bremskraft am kurvenäußeren Vorderrad zeitlich verzögert, so daß das gegendrehende Moment in den meisten Fällen zu spät aufgebaut wird und das Fahrzeug schon einen zu großen Drehimpuls zum Übersteuern erhalten hat. Das Kurvenbremsverhalten wird in diesem Falle, trotz gewollter stärkerer Bremsverzögerung, auf das Verhalten wie bei geringer Fahrzeugverzögerung zurückgeführt. Der Vorteil des gegendrehenden Momentes kann also nicht genutzt werden. Zu Vermeidung dieses Nachteils ist es bekannt, die Wirkung der Giermomentaufbauverzögerung bei Kurvenbremsung auszuschalten. Dies kann durch die Abschaltung oder Reduzierung der Giermomentenaufbauverzögerung bei Kurvenfahrt (Querbeschleunigung) geschehen.

Aus der EP-A 0 167 782 ist es bekannt bei einem Antiblockierregelsystem bei Kurvenfahrt an den Hinterradbremsen einen geringen Druck einzusteuern, um Seitenstabilität zu erhalten.

Die gemäß vorliegender Erfindung vorgeschlagene Lösung der Beeinflussung des Hinterradbremsdrucks bei Kurvenfahrt stellt eine weitere Lösung dieses Problems dar. Diese Lösung kann dabei alleine zur Anwendung kommen, jedoch auch in Kombination mit der erwähnten Abschaltung oder Reduzierung der Giermomentenaufbauverzögerung bei Kurvenfahrt. Auch ist es möglich, bei der kombinierten Lösung die Abschalt- oder Reduzierschwellen für die Querbeschleunigung höher zu setzen als dies bei der reinen Abschaltung notwendig wäre.

Es ist darauf zu achten, daß bei einer Blockierneigung an den Hinterrädern ein hierdurch vom Regler geforderter Druckabbau Vorrang behält. Man kann auch einem Maximalwert der Querbeschleunigung vorgeben, wie er bei der Kurvengrenzgeschwindigkeit auftritt, und diesen den Gradienten des Druckaufbaus 0 zuordnen.

Anhand der Zeichnung sollen Ausführungsbeispiele der Erfindung erläutert werden. Es zeigen:

Fig. 1 ein Blockschaltbild eines ersten Ausführungsbeispiels

Fig. 2 eine Detailschaltung für eine Alternative zu der Druckbeeinflussung an den Hinterrädern gemäß Fig. 1

Fig. 3–5 Druckverläufe an den Bremsen des Fahrzeuges.

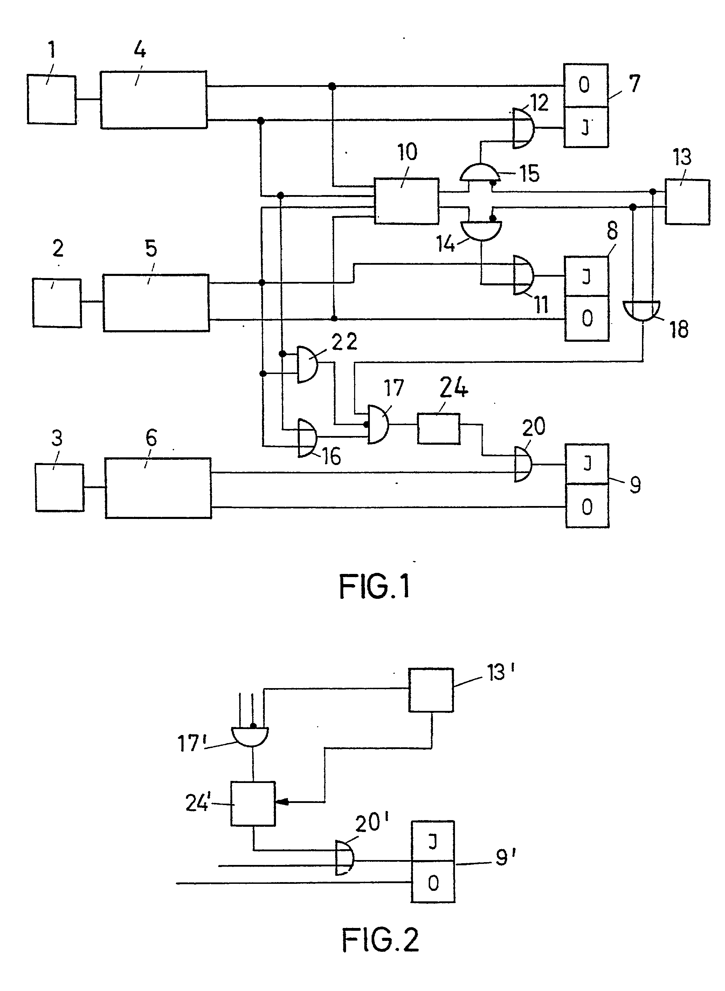

In Fig. 1 sind mit 1 und 2 die Sensoren an den Vorderrädern eines Fahrzeug bezeichnet, mit 3 ein den Hinterrädern zugeordneter am Ausgleichsgetriebe angebrachter Sensor. An dessen Stelle können auch zwei den beiden Hinterrädern zugeordnete Sensoren vorgesehen sein, die z.B. im Select-lowbetrieb eingesetzt werden. Mit 4–6 sind Auswerteschaltungen für diese Sensorsignale bezeichnet, die an ihren Ausgängen Bremsdrucksteuersignale an aus Einlaß-(I) und Auslaßventil (O) bestehende Bremsdrucksteuereinheiten 7–9 in Abhängigkeit von Radbewegungsverhalten der zugehörigen Räder abgeben.

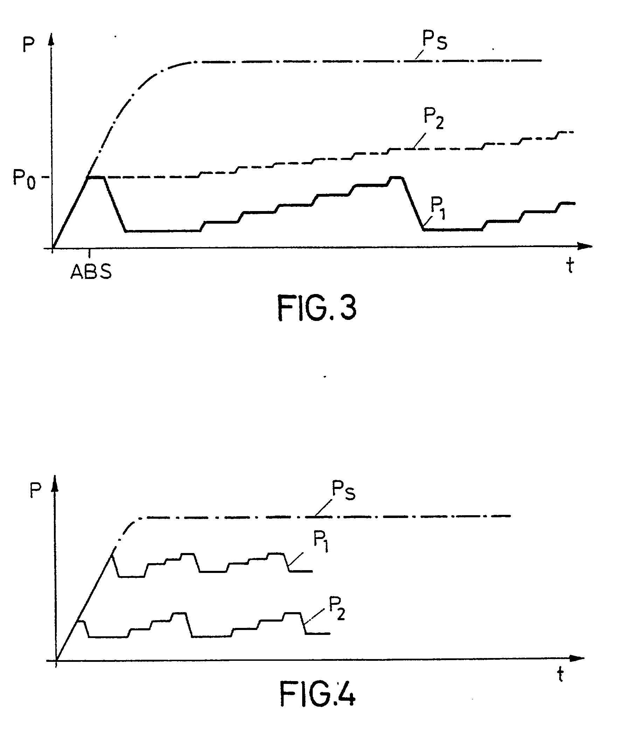

Das dargestellte Antiblockierregelsystem weist für die Vorderräder eine Giermomentaufbauverzögerung auf. Einem Block 10 werden hierzu die Bremsdrucksteuersignale der Auswerteschaltungen 4 und 5 zugeführt; diese werden dort so vernetzt, daß ab Auftreten einer Blockierneigung an einem Rad, z.B. erkannt von der Auswerteschaltung 4, Druckbegrenzungssignale für den anderen Kanal, also das Einlaßventil I der Bremsdrucksteuereinheit 8 erzeugt und über ein Oder-Gatter 11 eingekoppelt werden. Es wird hier unterstellt, daß ab Auftreten eines das Einlaßventil I der Bremsdrucksteuereinheit 7 des einen Vorderrades betätigenden Signals am Ausgang der Auswerteschaltung 4 der Druck am andern Rad konstant gehalten wird und erst bei Auftreten von gepulsten Ausgangssignalen am Ausgang zum Einlaßventil I der Bremsdrucksteuereinheit 7 (d.h. gepulster Druckaufbau) das Einlaßventil I der Bremsdrucksteuereinheit 8 mitgepulst wird. Hierdurch erhält man ein Verhalten der Bremsdrucke, wie dies in Fig. 3 dargestellt ist, wo mit PS der vom Fahrer eingesteuerte Druck, mit P1 der Druckverlauf am Low-Rad und mit P2 der Druckverlauf am High-Rad aufgetragen ist. Wird die Druckkonstanthaltephase nach einem Druckabbau zu lange (länger als eine vorgegebene Zeit), so können auch schon nach Ablauf dieser Zeit Druckaufbauimpulse für das zum Sensor 2 gehörende Rad erzeugt werden (wie in DE-A 3 421 700 in Fig. 3 dargestellt). Entsprechende Verläufe entstehen, wenn die Auswerteschaltung 5 eine Blockierneigung feststellt und dann eine Aufbaubegrenzung am andern Rad bewirkt (über Oder-Gatter 12).

In Fig. 1 ist zusätzlich noch ein Querbeschleunigungsgeber 13 dargestellt, sowie zwei von diesem gesteuerte Und-Gatter 14 und 15. Gibt dieser Querbeschleunigungsgeber 13 auf einem seiner Ausgänge (Querbeschleunigung unterschiedlicher Richtung) ein Querbeschleunigungssignal ab, so wird eines der Und-Gatter 14 oder 15 über einen invertierten Eingang gesperrt. Das bedeutet, daß bei Kurvenfahrt, bei der im allgemeinen das kurveninnere Rad zuerst Blockierneigung zeigt die zwecks Giermomentbegrenzung vorgesehene Druckbegrenzung am kurvenäußeren Rad unwirksam wird, so daß die Drücke an den Radbremsen unabhängig voneinander geregelt werden. Dies zeigt das Diagramm der Fig. 4, wobei hier von Regelbeginn an eine Kurvenfahrt unterstellt ist.

Beim Ausführungsbeispiel der Fig. 1 wird zusätzlich noch der Bremsdruck an den Hinterrädern bei Kurvenfahrt beeinflußt. Wie oben bereits gesagt, kann diese Maßnahme der Beeinflussung des Hinterradbremsdruckes auch ohne die Abschaltung der Giermomentenaufbauverzögerung gemäß obiger Beschreibung eingesetzt werden.

Zur Beeinflussung des Hinterradbremsdrucks ist ein Oder-Gatter 16 vorgesehen, dem die Ansteuersignale für die Einlaßventile I der Bremsdrucksteuereinheiten 7 und 8 zugeführt wurden und dessen Ausgang mit einem Und-Gatter 17 verbunden ist. Der zweite Eingang dieses Und-Gatters 17 ist über ein weiteres Oder-Gatter 18 mit den beiden Ausgängen des Querbeschleunigungsgebers 13 verbunden. Schließlich ist der dritte invertierte Eingang des Und-Gatters 17 mit dem Ausgang eines weiteren Und-Gatters 22 verbunden, dessen Eingänge mit den Ansteuerleitungen der Einlaßventile I der Bremsdrucksteuereinheiten 7 und 8 verbunden sind.

Somit gibt das Und-Gatter 17 ein Signal ab, wenn eine Querbeschleunigung vorgegebener Größe vorliegt und lediglich eines der Einlaßventile I angesteuert ist. Das Ausgangssignal des Und-Gatters 17 schaltet einen Impulsgenerator 24 ein, der dann über ein Oder-Gatter 20 Impulse auf das Einlaßventil I der Bremsdrucksteuereinheit 9 koppelt und damit nur noch gepulsten Druckaufbau an den Hinterradbremsen zuläßt.

Bei der Detailschaltung der Fig. 2 entspricht das Und-Gatter 17' dem Und-Gatter 17, das Oder-Gatter 20' dem Oder-Gatter 20, die Bremsdrucksteuereinheit 9' der Bremsdrucksteuereinheit 9 und der Querbeschleunigungsgeber 13' dem Querbeschleunigungsgeber 13.

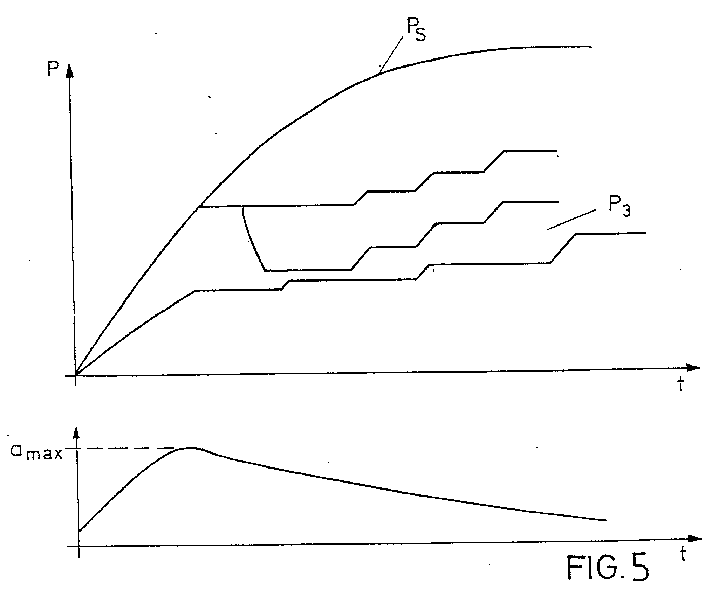

Liegt eine Querbeschleunigung bestimmter Größe vor und zeigt nur eines der Vorderräder Blockierneigung, so schaltet das Und-Gatter 17' den Impulsgenerator 24' ein, dessen Puls-Pauseverhältnis von dem zugeführten analogen Querbeschleunigungssignal derart abhängt, daß in der Nähe eines maximal möglichen Querbeschleunigungswert $a_{max}$ das Puls-Pauseverhältnis $\infty$ ist (Konstanthaltung) und bei abnehmender Querbeschleunigung das Puls-Pause-Verhältnis kleiner wird, so daß der Druck mit abnehmender Querbeschleunigung mit zunehmendem Gradienten anwächst. Dies ist in Fig. 5 gezeigt.

## Patentansprüche

1. Antiblockierregelsystem mit wenigstens getrennter Regelung des Bremsdrucks an den Vorderrädern und Regelung des Bremsdrucks an den Hinterrädern, mit einer Giermomentenaufbauverzögerung bei der bei Regelung des Drucks an einem der Vorderräder eine Begrenzung des Druckanstiegs an den anderem Vorderrad vorgenommen wird und mit einer Erkennungseinrichtung, die bei Kurvenfahrt (vorzugsweise erkannt durch einen Querbeschleunigungsgeber oder durch eine fahrzeuggeschwindigkeitsbezogene Drehzahldifferenz zwischen kurveninnerem und kurvenäußerem Rad) eine Änderung des Regelverhaltens bewirkt, dadurch gekennzeichnet, daß bei Kurvenfahrt eine Verminderung des Bremsdruckanstiegs an den Hinterrädern mit dem Auftreten einer Instabilität an dem zuerst Blockierneigung zeigenden Vorderrad eingeleitet wird und daß der verminderte Druckanstieg von der Größe der Querbeschleunigung abhängt derart, daß mit abnehmender Querbeschleunigung der Bremsdruckanstieg größer wird.

2. Antiblockierregelsystem nach Anspruch 1, dadurch gekennzeichnet, daß bei einer vorgegebenen maximalen Querbeschleunigung der Bremsdruck konstant gehalten wird.

3. Antiblockierregelsystem nach Anspruch 1 oder 2, dadurch gekennzeichnet, daß zusätzlich die Giermomentenaufbauverzögerung an den Vorderrädern bei Kurvenfahrt reduziert oder abgeschaltet wird.

4. Antiblockierregelsystem nach Anspruch 2, dadurch gekennzeichnet, daß die Reduzierung oder Abschaltung der Giermomentenaufbauverzögerung bei höheren Querbeschleunigungswerten als ohne Hinterraddruckbeeinflussung notwendig erfolgt.

## Claims

1. Anti-skid regulating system with at least separate regulation of the brake pressure at the front wheels and regulation of the brake pressure at the rear wheels, having a yawing-moment build-up delay during which, during regulation of the pressure at one of the front wheels, a limitation of the pressure rise at the other front wheel is performed, and having a detection arrangement which effects an alteration of the regulating behaviour during cornering (preferably detected by a transverse acceleration transmitter or by a vehicle speed-dependent difference in the rotational speed of the wheel on the inside of the curve and the wheel on the outside of the curve), characterized in that, during cornering, a reduction of the brake pressure rise at the rear wheels is initiated with the appearance of an instability at the front wheel first showing a lock-up tendency, and in that the reduced pressure rise depends on the magnitude of the transverse acceleration in such a way that the brake pressure rise becomes greater as the transverse acceleration decreases.

2. Anti-skid regulating system according to Claim 1, characterized in that, at a predetermined maximum transverse acceleration, the brake pressure is held constant.

3. Anti-skid regulating system according to Claim 1 or 2, characterized in that, in addition, the yawing-moment build-up delay at the front wheels is reduced or switched off during cornering.

4. Anti-skid regulating system according to Claim 2, characterized in that the yawing-moment build-up delay is reduced or switched off at higher transverse acceleration values than is necessary without influencing of the rear-wheel pressure.

## Revendications

1. Système de régulation anti-blocage, comportant au moins une régulation séparée de la pression de freinage sur les roues avant et une régulation de la pression de freinage sur les roues arrière, avec un retardement de l'établissement du couple d'embardée, dans lequel, lors de la régulation de la pression sur l'une des roues avant, on réalise une limitation de l'augmentation de la pression sur l'autre roue avant et comportant un dispositif d'identification qui provoque une modification du comportement en régulation lors d'une courbe (qui est de préférence identifiée au moyen d'un capteur d'accélération transversale ou au moyen d'une différence de vitesse, mesurée entre la roue située à l'intérieur de la courbe et la roue située à l'extérieur et rapportée à la vitesse du véhicule), caractérisé en ce que, lors d'une courbe, on met en oeuvre une diminution de l'augmentation de la pression de freinage sur les roues arrière, lorsque survient une instabilité sur la roue avant qui présente d'abord une tendance au blocage et en ce que l'augmentation diminuée de la pression dépend de la valeur de l'accélération transversale, et que l'augmentation de la pression de freinage augmente lorsque l'accélération transversale diminue.

2. Système de régulation anti-blocage selon la revendication 1, caractérisé en ce que la pression de freinage est maintenue constante dans le cas d'une accélération transversale maximale prédéterminée.

3. Système de régulation anti-blocage selon la revendication 1 ou 2, caractérisé en ce que, lors d'un virage, le retardement à l'établissement d'un couple d'embardée sur les roues avant est en plus réduit ou annulé.

4. Système de régulation anti-blocage selon la revendication 2, caractérisé en ce que la réduction ou l'annulation du ralentissement de l'établissement d'un coupe d'embardée s'effectue pour des valeurs de l'accélération transversale qui sont plus élevées que sans correction de la pression sur les roues arrière.

FIG.1

FIG.2

EP 0 235 515 B1

FIG.3

FIG.4

FIG.5